# EUROPÄISCHE PATENTSCHRIFT

(11) **EP 4 182 644 B1**
(45) Veröffentlichungstag und Bekanntmachung des Hinweises auf die Patenterteilung: **01.10.2025**
(21) Anmeldenummer: 20743674.2
(22) Anmeldetag: 20.07.2020
(51) Int. Cl.: G01F 23/284

(54) **MEHRDIMENSIONAL MESSENDES FÜLLSTANDRADAR UND VERFAHREN**
MULTIDIMENSIONAL RADAR LEVEL GAUGE AND METHOD
JAUGE DE NIVEAU DE REMPLISSAGE RADAR POUR MESURER MULTIDIMENSIONNEL ET PROCÉDÉ

(43) Veröffentlichungstag der Anmeldung: 24.05.2023
(73) Patentinhaber: VEGA Grieshaber KG, 77709 Wolfach (DE)
(72) Erfinder: WELLE, Roland, 77756 Hausach (DE); BÖRSIG, Jörg, 77776 Schapbach (DE); WÄLDE, Steffen, 78078 Niedereschach (DE); KLEISER, Samuel, 77723 Gengenbach (DE)
(74) Vertreter: Maiwald GmbH
(86) Internationale Anmeldenummer: PCT/EP2020/070477
(87) Internationale Veröffentlichungsnummer: WO 2022/017579

(56) Entgegenhaltungen:
- EP-A1- 2 199 762
- EP-A1- 3 401 651
- WO-A1-2019/068347

## Beschreibung

### Gebiet der Erfindung

Die vorliegende Erfindung betrifft die Messung von Füllständen und Füllgutoberflächentopologien. Insbesondere betrifft die Erfindung ein Verfahren zum Erfassen eines Füllstands oder einer Topologie einer Oberfläche eines Füllguts durch ein Füllstandradar, ein mehrdimensional messendes Füllstandradar, ein Programmelement und ein computerlesbares Medium.

### Technischer Hintergrund

Zur Bestimmung von Füllständen oder Oberflächentopologien von Schüttgütern werden mehrdimensional, d.h. zwei- oder dreidimensional messende Radarsysteme verwendet. Auch im Bereich der Prozessautomatisierung im industriellen Umfeld oder der Fabrikautomatisierung können derartige Messgeräte eingesetzt werden. Beispielhaft, aber nicht abschließend seien an dieser Stelle insbesondere dreidimensional messende Radarsysteme für die Vermessung von Schüttguthalden (Topologieerfassende Radarsysteme), aber auch mehrdimensional messende Mikrowellenschranken genannt.

Bei einem topologieerfassenden Radarsystem als Beispiel für Sensoren aus dem Bereich der Prozessautomatisierung besteht insbesondere zur Erlangung einer schnellen Marktdurchdringung die Notwendigkeit, dass ein solches System seine komplette Versorgungsleistung aus einer 4..20mA Schnittstelle bezieht. Mit bislang bekannten Vorrichtungen lassen sich die sich daraus ergebenden Einschränkungen in Bezug auf die benötigte elektrische Leistung eines entsprechend ausgestalteten Sensors jedoch nur durch den Einsatz eines entsprechend groß dimensionierten Energiespeichers und das Einfügen großer Zeiträume mit deaktivierter Sensorelektronik zur Regenerierung des Energiespeichers realisieren.

Bei der mehrdimensional messenden Mikrowellenschranke als Beispiel eines Sensors für die Fabrikautomation ergeben sich große Wettbewerbsvorteile immer dann, wenn diese ihre gesamte für den Betrieb notwendige Energie aus einer IO-Link Schnittstelle beziehen kann, über welche auch ein Schaltsignal bei einem erkannten Objekt im Überwachungsbereich nach außen hin bereitgestellt werden kann.

EP 3 401 651 A1 beschreibt ein Füllstandradar mit kurzer Messzeit mit einem Prozessor, einer Analog-Digital-Wandlerschaltung und einem dazwischengeschalteten Zwischenspeicherbaustein.

WO 2019/068347 A1 beschreibt ein Füllstandmessgerät mit einem Radarsystem und Chip mit mehreren Sende- und Empfangskanälen sowie eine Rauschpegelreduktionseinrichtung.

EP2 199 762 A1 beschreibt einen Sensor und ein Verfahren zur Messung der Entfernung einer Grenzfläche, wobei die Steuerung oder die Zeitbasiseinheit auf einem digitalen Logikbaustein implementiert ist.

### Zusammenfassung der Erfindung

Vor diesem Hintergrund ist es eine Aufgabe der vorliegenden Erfindung, den Energieverbrauch bei der Füllstandmessung zu vermindern.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der vorliegenden Offenbarung betrifft ein Verfahren zum Erfassen eines Füllstands und/oder einer Topologie einer Oberfläche eines Füllguts oder Schüttguts durch ein Füllstandradar, beispielsweise zur Prozessautomatisierung im industriellen Umfeld.

Hierbei wird zunächst der Prozessor des Füllstandradars gestartet, woraufhin, falls erforderlich, Energie in einem füllstandradarinternen Energiespeicher gesammelt wird. Sobald nach dem Start des Prozessors genügend Energie im Energiespeicher des Füllstandradars gesammelt worden ist, wird ein Messzyklus durchgeführt. Zu Beginn des Messzyklus wird ein programmierbares Logikgatter gestartet. Das Merkmal "programmierbares Logikgatter" ist breit auszulegen. Beispielsweise handelt es sich hierbei um ein Field Programmable Gate Array, FPGA.

Danach werden die Radarchips des Füllstandradars zum Durchführen einer Radarmesssequenz gestartet. Im Regelfall weist das Füllstandradar mehrere Radarchips auf. Es kann aber auch nur ein einzelner Radarchip vorgesehen sein. Am Ende des Messzyklus wird der/werden die Radarchips abgeschaltet, so beispielsweise in einen Schlafmodus versetzt oder komplett von der Energieversorgung getrennt.

Daraufhin erfolgt die Berechnung der Topologie der Füllgutoberfläche oder des Füllstands oder des Volumens des Füllguts durch das programmierbare Logikgatter und den Prozessor, wenn hierfür genügend Energie bereitsteht. Andernfalls wird jetzt noch einmal Energie gesammelt, bis der Energiespeicher ausreichend geladen ist. Nach der Berechnung wird das programmierbare Logikgatter abgeschaltet oder in einen Schlafmodus versetzt. Danach wird der Prozessor abgeschaltet oder in einen Schlafmodus versetzt, sodass der Energiespeicher möglichst schnell aufgeladen werden kann.

Gemäß einer Ausführungsform erfolgt vor dem Berechnen der Topologie bzw. des Füllstands durch das programmierbare Logikgatter ein Abschalten des programmierbaren Logikgatters, falls bisher nicht genügend Energie für das Berechnen der Topologie des Füllstands gesammelt worden ist. Ein solches Abschalten kann auch während des Berechnungsvorgangs erfolgen, falls die Energie zur Neige geht.

Gemäß einer Ausführungsform erfolgt das Abschalten des programmierbaren Logikgatters durch Öffnen einer Steuerleitung zwischen dem Prozessor und dem programmierbaren Logikgatter und Stromlosschalten des programmierbaren Logikgatters.

Gemäß einer weiteren Ausführungsform stammt die Energie, die in dem Energiespeicher gesammelt wird, vollständig aus einer Zweidrahtleitung, einer Dreidrahtleitung oder einer Batterie des Füllstandmessgeräts.

Gemäß einer weiteren Ausführungsform wird der Prozessor vor dem Sammeln von Energie in dem Energiespeicher in einen Energiesparmodus versetzt oder abgeschaltet.

Gemäß einer weiteren Ausführungsform ist das programmierbare Logikgatter ein Field Programmable Gate Array, FPGA.

Ein weiterer Aspekt der vorliegenden Offenbarung betrifft ein mehrdimensional messendes Füllstandradar, welches zur Durchführung eines oben und im Folgenden beschriebenen Verfahrens eingerichtet und programmiert ist.

Das mehrdimensional messende Füllstandradar weist einen Prozessor, ein programmierbares Logikgatter, einen oder mehrere Radarchips zum Durchführen einer Radarmesssequenz und ein Netzteil auf, das eingerichtet ist zur Spannungsversorgung des Prozessors, des programmierbaren Logikgatters und der Radarchips.

Das Füllstandradar weist weiterhin einen oder mehrere Spannungsversorgungsschalter auf, eingerichtet zum wahlweisen Unterbrechen der Spannungsversorgung des Prozessors, der Spannungsversorgung des programmierbaren Logikgatters und/oder der Spannungsversorgung der Radarchips.

Das Füllstandradar weist weiterhin einen oder mehrere Steuerleitungsschalter auf, eingerichtet zum wahlweisen Unterbrechen der Steuerleitungen zwischen dem Prozessor und den Radarchips.

Das Füllstandradar weist weiterhin einen oder mehrere Datenleitungsschalter auf, eingerichtet zum Unterbrechen der Datenleitungen zwischen den Radarchips und dem programmierbaren Logikgatter.

Ein weiterer Aspekt der vorliegenden Offenbarung betrifft ein Programmelement, das, wenn es auf einem Prozessor eines mehrdimensional messenden Füllstandradars ausgeführt wird, das Füllstandradar anleitet, die oben und im Folgenden beschriebenen Schritte durchzuführen.

Ein weiterer Aspekt der vorliegenden Offenbarung betrifft ein computerlesbares Medium, auf dem ein oben beschriebenes Programmelement gespeichert ist.

Ein weiterer Aspekt der vorliegenden Offenbarung betrifft die Verwendung eines oben und im Folgenden beschriebenen mehrdimensional messenden Radars oder eines oben und im Folgenden beschriebenen Verfahrens zur Bereichsüberwachung.

Ein weiterer Aspekt der vorliegenden Offenbarung betrifft die Verwendung eines oben und im Folgenden beschriebenen mehrdimensional messenden Radars oder eines oben und im Folgenden beschriebenen Verfahrens als bzw. für eine Mikrowellenschranke.

Im Folgenden werden mit Verweis auf die Figuren Ausführungsformen der Erfindung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

Bei den obigen Verwendungen können die Schritte "Berechnen der Topologie oder des Füllstands" entbehrlich sein. Es kann alternativ ein "Ermitteln eines Schaltsignals" vorgesehen sein. Entsprechende Verfahren sind dem Fachmann bekannt.

### Kurze Beschreibung der Figuren

Fig. 1 zeigt ein mehrdimensional messendes Füllstandradar.
Fig. 2 zeigt ein weiteres mehrdimensional messendes Füllstandradar.
Fig. 3 zeigt ein weiteres mehrdimensional messendes Füllstandradar.
Fig. 4 zeigt ein Flussdiagramm eines Verfahrens.

### Detaillierte Beschreibung von Ausführungsformen

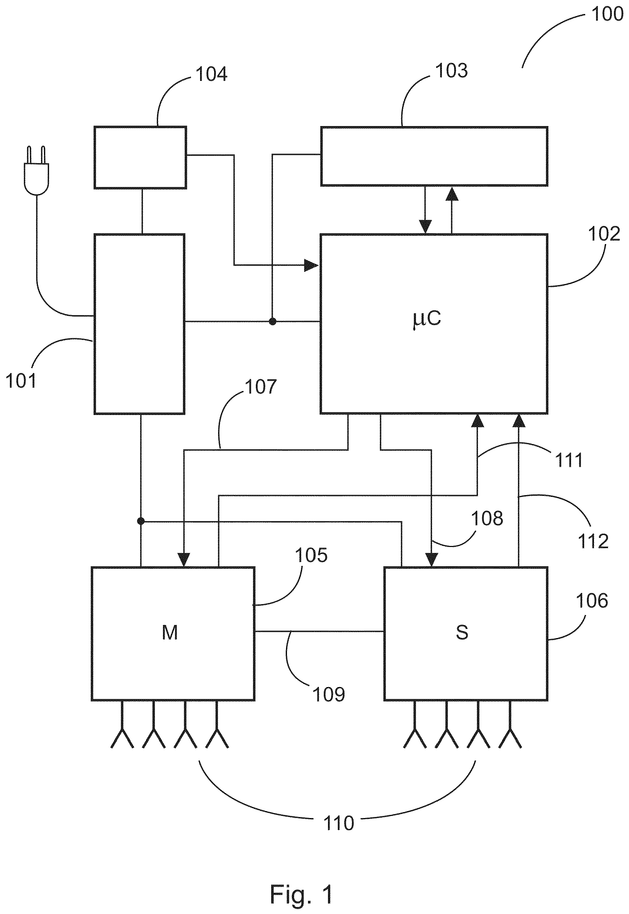

Fig. 1 zeigt ein mehrdimensional messendes Füllstandradar, welches insbesondere zur Prozessautomatisierung im industriellen Umfeld ausgeführt sein kann.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Mit den in der vorliegenden Offenbarung vorgeschlagenen Ausführungen und Abläufen kann eine mehrdimensional messende Anordnung für die verschiedensten Anwendungsszenarien bereitgestellt werden, welche ausgestaltet ist, unter Verwendung von bestimmten Komponenten und Abläufen ein Höchstmaß an Energieeffizienz zu erreichen. Hierdurch wird es möglich, die komplette Sensorik aus einer Zwei- oder Dreileiterschnittstelle heraus mit Energie zu versorgen. Gleichermaßen kann erreicht werden, dass nur wenig Energie im Sensor zwischengespeichert werden muss, was insbesondere im Hinblick auf Anforderungen des Explosionsschutzes, aber auch im Hinblick auf Baugröße und Herstellungskosten von Vorteil sein kann.

Insbesondere wird ein mehrdimensional messendes Radarsystem bereitgestellt, welches zumindest einen Mikrocontroller, und ein mehrkanalig ausgeführtes Radarsystem on Chip (RSoC) umfasst, und welches ausgebildet ist, seine gesamte für den Betrieb notwendige Energie aus einer 2-Leiter-Schnittstelle oder einer 3-Leiter-Schnittstelle zu beziehen

Eindimensional messende Radarsysteme sind seit vielen Jahren Stand der Technik. Insbesondere im Bereich der Prozessautomation, aber auch im Bereich der Fabrikautomation oder der Sicherheitstechnik werden die entsprechend ausgebildeten Sensoren genutzt, um den Abstand zu einem Objekt zu ermitteln, und über eine 2-Leiter-Schnittstelle (4..20mA) oder eine 3-Leiter-Schnittstelle (IO-Link) nach außen hin bereitzustellen.

Darüber hinaus eröffnet sich aufgrund neuerer Entwicklungen aus dem Bereich des Automobilbaus die Möglichkeit, mehrdimensional messende Radarsysteme für den Automatisierungsbereich zu realisieren. Grundlage hierzu sind die seit einiger Zeit verfügbaren Radarsysteme on Chip (RSoC), welche eine Vielzahl an Hardwarekomponenten zur Realisierung von mehreren Sendekanälen und mehreren Empfangskanälen für Radarsignale inclusive der dazu notwendigen digitalen Steuerschaltungen auf einem einzigen Chip bereitstellen.

Mit mehrdimensional messenden Radarsystemen ist es möglich, nicht nur die Entfernung zu einem Objekt zu ermitteln, sondern auch dessen Lage im Raum genau zu erfassen. Fig. 1 zeigt ein erstes Beispiel eines mehrdimensional messenden Radarsystems 100. Die Komponenten des Systems werden über eine Netzteileinheit 101, welche hinreichend Energie, beispielsweise aus einem KFZ-Bordnetz 102, beziehen kann, mit Energie versorgt. Ein spezialisiert ausgeführter Mikroprozessor 102 kann bis zu zwei RSoC Bausteine 105, 106 über die SPI Schnittstellen 107, 108 mit Ansteuersignalen beaufschlagen. Die Radarbausteine 105, 106 sind in einer Master-Slave-Konfiguration verschaltet, und synchronisieren sich über mindestens eine hochfrequente Synchronisationsleitung 109, so dass in Summe eine Vielzahl an Sende- und/oder Empfangsantennen 110 angesteuert werden kann. Die von den Bausteinen 105, 106 über die Antennen 110 empfangenen Signale werden in digitalisierter Form an entsprechend ausgestalteten synchronen Hochgeschwindigkeitsschnittstellen 111, 112 an den Prozessor 102 übermittelt. Der Prozessor weist spezialisierte Eingänge auf, um die Signale 111, 112 einlesen zu können. Hierbei kommen insbesondere LVDS-Schnittstellen oder auch CSI-2 Schnittstellen zur Anwendung. Der Prozessor ist weiterhin ausgeführt, über entsprechend leistungsfähige Recheneinheiten die Prozessierung der Radarsignale, insbesondere durch digitale Strahlformung, zu realisieren, und die Position einzelner Reflektoren im Raum zu ermitteln und nach außen hin bereitzustellen. Unterstützend wirken hierbei insbesondere ein nichtflüchtiger Speicher 104 mit, in welchem die Programmlogik des Prozessors 102 abgelegt ist, sowie ein flüchtiger Speicher 103, beispielsweise ein DDR2, DDR3 oder DDR4 Speicher, welcher schnelle Speicherzugriffe über seine Schnittstellen erlaubt. Die Komponenten des Systems werden nach dem Start kontinuierlich mit Energie versorgt. Unter Verwendung des applikationsoptimierten Prozessors 102 lassen sich bis zu zwei Radarbausteine zu einem System integrieren und auswerten, wobei der Energiebedarf für die Durchführung einer Messung dennoch hoch ist.

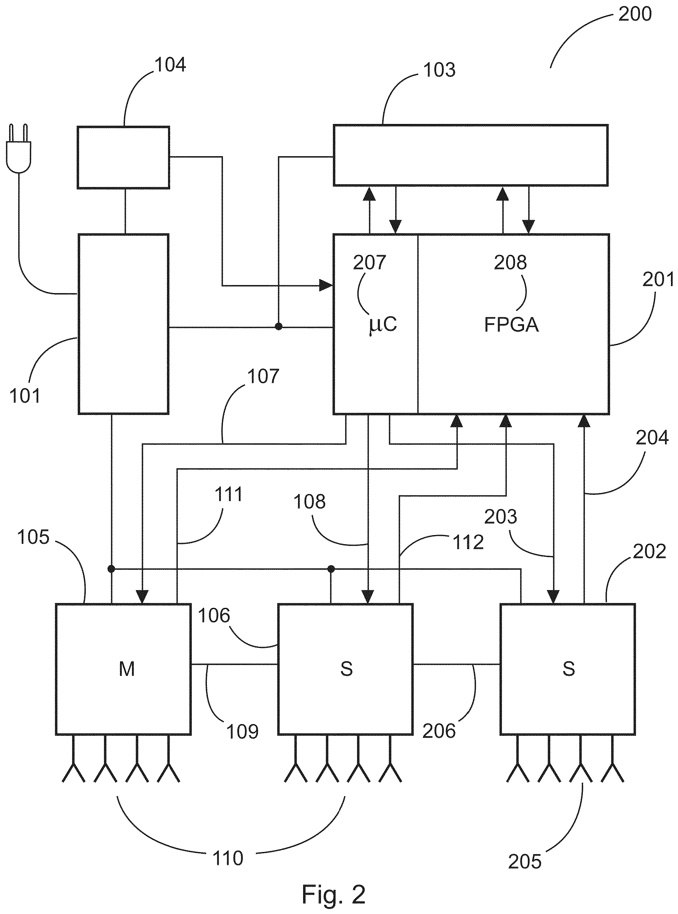

Für viele Anwendungen im Bereich der Prozessautomatisierung oder der Fabrikautomatisierung ist es erforderlich, die Abbildungsqualität des Radarsystems gegenüber derer der Anordnung der Fig. 1 massiv zu verbessern. Beispielsweise kann die Anzahl an Radarchips (RSoC) erhöht werden. Fig. 2 zeigt ein entsprechendes Beispiel. Durch Einbringen eines weiteren Radarchips 202, welcher als zweiter Slave fungiert, und einer damit einhergehenden Erhöhung der Anzahl an Sende- und/oder Empfangsantennen 110, 205 verbessert sich die Auflösung des Radarsystems und damit die Genauigkeit bei der Bestimmung der räumlichen Position eines Reflektors. Der zusätzliche Radarchip wird über eine weitere Synchronisationsleitung 206 mit den bisherigen RSoC's 105, 106 synchronisiert. Für die erweiterte Anordnung 105, 106, 202 an Radarchips existiert kein spezialisierter Prozessor 102, weshalb solche Systeme üblicherweise mit einem sogenannten System on Chip (SoC) ausgewertet werden, welches dadurch gekennzeichnet ist, einen generischen Prozessor 207 und ein frei programmierbares FPGA 208 in einem Chip zu integrieren. Mit Hilfe des FPGA Teils 208 lassen sich insbesondere schnelle digitale Interfaces für die Signale 111, 112, 204 der Radarchips implementieren. Darüber hinaus lässt sich auch ein Großteil der Berechnungen zur digitalen Strahlformung im FPGA 208 des SoC 201 realisieren. Die Anordnung 200 zeichnet sich im Vergleich zur Anordnung 100 durch eine höhere Qualität der Radarmessung aus, benötigt aber im Vergleich zur Anordnung 100 durch den Einsatz eines zusätzlichen RSoC 202 und des SoC 201 zur Auswertung der Signale wesentlich mehr Energie während einer Durchführung einer Messung, und entfernt sich somit im Vergleich zu der mit der Anordnung der Fig. 1 realisierten Lösung noch weiter von dem Ziel, mehrdimensionale Radarsysteme bereitzustellen, welche ihre gesamte Versorgungsleistung aus einer Zweidraht- oder einer Dreidrahtschnittstelle beziehen.

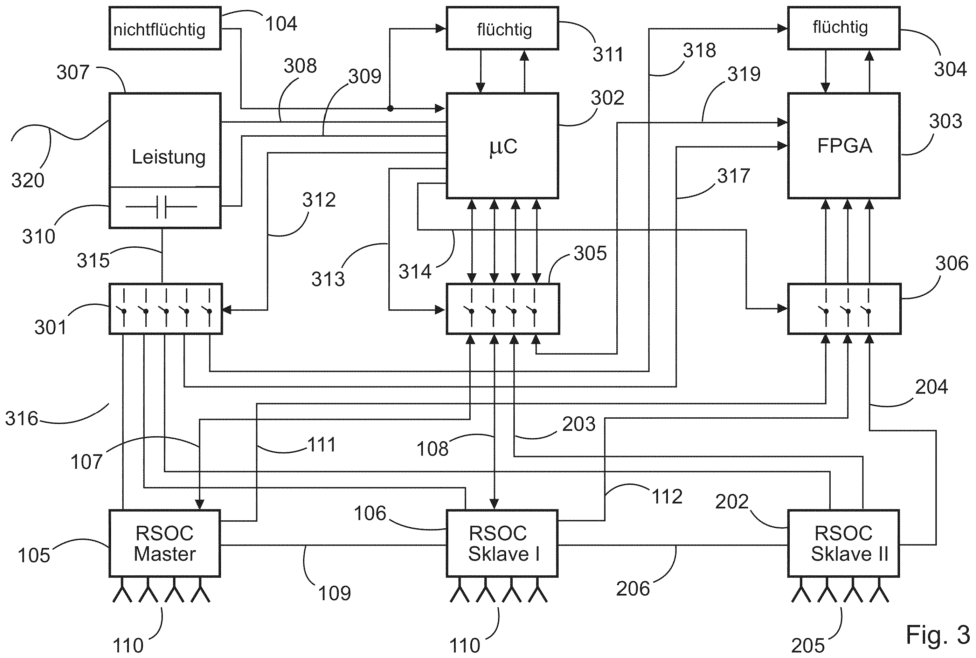

Fig. 3 zeigt eine weitere Ausführungsform. Ein Kernaspekt ist es, einen extrem energiesparenden Mikroprozessor 302 vorzusehen, der den zeitlichen Ablauf einer Messung steuert, und hierzu vom Netzteil 307 über eine Versorgungsleitung 308 permanent mit Energie versorgt wird.

Ein Steuerungsprogramm ist in einem nichtflüchtigen Speicher 104 persistent abgelegt, und kann beim Einschalten des Systems in den Prozessor 302 und/oder den mit dem Prozessor 302 verbundenen, flüchtigen Speicher 311 geladen und ausgeführt werden. Der Steuerungsprozessor 302 ist über eine Signalisierungsleitung 309 mit dem Netzteil 307 verbunden, über welche er insbesondere den Ladezustand eines im Netzteil 307 integrierten Energiespeichers 310, beispielsweise eines Kondensators oder einer Batterie, auslesen und überwachen kann. Wesentliche Komponente zum Aufbau eines Füllstandradars 300 sind darüber hinaus die Spannungsversorgungsschalter 301, die Steuerleitungsschalter 305 sowie die Datenleitungsschalter 306, welche es dem Prozessor 302 über die Schaltsignale 312, 313, 314 erlauben, einzelne Komponenten des Systems während eines Messablaufes gezielt einzuschalten und gezielt wieder auszuschalten. So kann beispielsweise über die Spannungsversorgungsschalter 301 gezielt Versorgungsspannung 315 über die Leitungen 316 zu den Komponenten 105, 106, 202, 303, 304 weitergeleitet werden, was zur Folge hat, dass die entsprechenden Bauteile in den betriebsfähigen Zustand überführt werden können. Weiterhin ist es möglich, die Versorgung einzelner Komponenten 105, 106, 202, 303, 304 gezielt wieder zu unterbrechen, was den Energieverbrauch der jeweiligen Einheiten unmittelbar auf null reduziert. Die RSoC's 105, 106, 202 können während eines Zeitraumes der Versorgung mit elektrischer Energie in bekannter Weise über die Steuerleitungen 107, 108, 203 vom Prozessor mit Steuersignalen beaufschlagt und insbesondere eingestellt und parametriert werden. Während eines Zeitraumes ausbleibender elektrischer Energie kann das elektrische Verhalten der RSoC's 105, 106, 202 in Bezug auf die Steuerleitungen 107, 108, 203 nicht vorhergesagt werden, da ein solcher Betriebsmodus im Rahmen der Entwicklung der Bausteine nicht vorgesehen wurde. Zur Sicherstellung eines vorschriftsmäßigen Betriebes können die Verbindungen der Steuersignale 107, 108, 203 zum Prozessor 302 hin in definierter Art und Weise mit Hilfe der Steuerleitungsschalter 305 einzeln oder gemeinsam geschlossen oder geöffnet werden. Weiterhin weist das Füllstandradar 300 einen FPGA 303 nebst zugehörigem Arbeitsspeicher 304 auf, welche über die Versorgungsleitungen 317, 318 und den Spannungsversorgungsschalter 301 mit elektrischer Energie aus dem Netzteil 307 versorgt werden können. Der FPGA 303 kann nach erfolgter Beaufschlagung mit Versorgungsenergie über die Steuerleitung 319 und den Steuerleitungsschalter 305 signaltechnisch mit dem Prozessor 302 verbunden werden. Der Prozessor 302 kann nach erfolgter Aktivierung den FPGA 303 über die Steuerleitung 319 insbesondere durch Übermittlung einer binären Programmiersequenz (Bitstream) in einen betriebsfähigen Zustand überführen. Nach erfolgter Programmierung des FPGA 303 und erfolgter Inbetriebnahme und Parametrierung der RSoC's 105, 106, 202 können die Datenleitungen 111, 112, 204 der RSoC's über den Datenleitungsschalter 306 mit den entsprechend vorkonfigurierten Eingangspins des FPGA 303 verbunden werden. Gleichzeitig ist es möglich, nach erfolgter Messung vor einem Abschalten der RSoC's 105, 106, 202 durch Ansteuerung 314 des Prozessors 302 sicherzustellen, dass die Datenleitungen 111, 112, 204 vorab unterbrochen und insbesondere die entsprechenden Eingangspins des FPGA 303 in einen hochohmigen Zustand versetzt werden.

Es sei an dieser Stelle darauf hingewiesen, dass alle in der Fig. 3 gezeigten Schalter 301, 305, 306 eine Vielzahl an einzelnen Schaltelementen aufweisen können, über welche eine Vielzahl tatsächlich vorhandener, von der jeweiligen Signaltechnologie abhängigen Anzahl an elektrisch notwendigen Leitungsverbindungen geschlossen und/oder geöffnet werden können. So kann es sich bei den Steuerleitungen 107, 108, 203, 319 beispielsweise um eine SPI, QSPI oder eine IIC Technologie handeln, welche beispielsweise aus einer Transmitleitung, einer Receiveleitung, einem Chipselect und/oder einer Taktleitung bestehen kann. Die Darstellung einer einzelnen Leitung 107, 108, 203, 319 kann in der technischen Umsetzung das Einbringen einer Vielzahl an elektrischen Leitungen bedeuten. Entsprechende Überlegungen gelten auch für die Signalleitungen 111, 112, 204. Weiterhin sei darauf hingewiesen, dass ein "Schließen" eines Schalterelementes innerhalb der Schalter 301, 305, 306 ein Herstellen einer elektrischen Verbindung oder aber auch ein Aktivieren einer Treiberschaltung oder eines Pegelumsetzers bedeuten kann. Darüber hinaus kann ein "Öffnen" eines Schalterelementes innerhalb der Schalter 301, 305, 306 ein Trennen einer elektrischen Verbindung oder aber auch ein Deaktivieren einer Treiberschaltung oder eines Pegelumsetzers bedeuten oder aber auch ein Umschalten auf einen hochohmigen Zustand. Auf diese Weise kann verhindert werden, dass undefinierte, den Energieverbrauch negativ beeinflussende Querströme von einer aktivierten Komponente 302, 303 hin zu einer deaktivierten Komponente 105, 106, 202 fließen können.

Wie eingangs beschrieben werden für die Radarkomponenten 105, 106, 202 hoch integrierte Bausteine verwendet, welche insbesondere für Anwendungen in nicht leistungsbegrenzten Applikationen entwickelt wurden. Mit Hilfe der Schalter 301, 305, 306 kann der Energiebedarf der Komponenten 105, 106, 202 immer dann auf null reduziert werden, wenn diese in der jeweiligen Phase eines Messablaufes nicht benötigt werden. Es kann bausteinabhängig temporär oder alternativ auch vorgesehen sein, die RSoC's 105, 106, 202 während inaktiver Phase durch Einbringen entsprechender Steuerbefehle über die Steuerleitungen 107, 108, 203 in einen energiesparenden Stand-By-Modus zu überführen in welchem insbesondere die Hochfrequenzschaltkreise der RSoC's 105, 106, 202 deaktiviert sind, aber vorgenommene Einstellungen und Parametrierungen in entsprechend vorgesehenen digitalen Schaltkreisen erhalten bleiben.

Der Steuerungsprozessor 302 koordiniert und steuert den ganzen Messablauf des Füllstandradars 300, und kann folglich während des Betriebes der Anordnung 300 nie ganz ausgeschaltet werden. An dieser Stelle werden sehr energiesparende Prozessortechnologien verwendet, welche durch ausgeklügelte Power Down Modi vielschichtige Energieeinsparmaßnahmen unterstützen können. Solche Prozessoren sind seit geraumer Zeit insbesondere für Anwendungen im Bereich batteriebetriebener Produkte am Markt verfügbar. Als Programmspeicher 104 kommen bekannte Technologien wie Flash, FRAM oder EEPROM Bausteine zum Einsatz. Der Arbeitsspeicher 311 des Prozessors 302 kann als SRAM, FRAM, DRAM oder auch als Hyper RAM ausgeführt sein. Es kann vorgesehen sein, dass der Programmspeicher 104 und/oder der Arbeitsspeicher 311 im Prozessor 302 teilweise und/oder vollständig integriert ist.

Der FPGA 303 wird verwendet, um den speziellen Anforderungen beim Aufbau mehrdimensionaler Radare für die Automatisierungstechnik im Hinblick auf die Auswertung einer Vielzahl an RSoC's 105, 106, 202 und im Hinblick auf die benötigte Rechnerarchitektur zur effizienten Berechnung der Auswerteschritte für die Radarsignale Rechnung zu tragen. An dieser Stelle können klassische SRAM basierte FPGA's verwendet werden, welche gemäß dem Ausführungsbeispiel der Fig. 3 nach jedwedem Anschluss an eine Versorgungsspannung 317 von außen über eine Steuerleitung 319, beispielsweise eine synchrone Steuerleitung 319 wie SPI oder QSPI, mit einer binären Programmiersequenz (Bitstream) erneut konfiguriert werden müssen. Es können aber auch integrierte SRAM basierte FPGA's mit einem im Gehäuse integrierten Flash-Speicher eingesetzt werden. Das Konfigurieren des FPGA's über die Steuerleitung 319 kann in diesem Fall entbehrlich sein, da entsprechend vorprogrammierte FPGA's direkt nach Anschluss an eine Betriebsspannung 317 die Konfigurationsdaten selbständig aus dem Flash Speicher laden. Nachteilig an den SRAM basierten FPGA's ist allerdings, dass diese extrem hohen Spitzenwerte des benötigten Stromes auf der Versorgungsleitung 317 während der Konfiguration verursachen, was die Realisierung des Netzteils 307 erschweren kann. Zudem muss diese Konfiguration bei jedem Start des FPGA erneut geschrieben werden, was zu zusätzlichem Energieverbrauch führen kann. In einer besonders vorteilhaften Ausgestaltung kann es daher vorgesehen sein, nichtflüchtige FPGA Technologien 303 vorzusehen. Diese werden auf Basis der Flash Technologie aufgebaut, und bieten im Umfeld der vorliegenden Erfindung den besonderen Vorteil, nach einmaliger Konfiguration im Werk oder während einer ersten Inbetriebnahme die konfigurierte Bitstream Logik nicht mehr zu verlieren. Ein erneutes Schreiben einer binären Programmiersequenz (Bitstream) kann während des Betriebes folglich unterbleiben. Zudem können Berechnungen im FPGA an beliebiger Stelle unterbrochen werden, da auch die Speicherinhalte nach Abschalten der Versorgungsspannung 317 persistent erhalten bleiben. Somit ist es möglich, den FPGA zwischen den einzelnen Schritten einer umfangreichen Berechnung zu deaktivieren, um erneut Energie zu sammeln.

Es kann auch vorgesehen sein, anstelle der zuvor genannten FPGA Technologien Derivate zu verwenden, welche im Gegensatz zu den Flash basierten FPGA's nur ein einziges Mal programmiert werden können, wie diese aber anschließend ohne vorgelagertes Booten nach Anlegen einer Versorgungsspannung sofort betriebsbereit sind. Eine hierfür oft verwendete Familie sind die sogenannten Antifuse FPGA.

Für den Fall, dass der im FPGA realisierte Speicher nicht ausreicht, kann ein externer Arbeitsspeicher 304 vorgesehen sein, welcher über die Versorgungsleitung 318 ebenfalls abgeschaltet werden kann. Als Speicher kommen hier insbesondere DRAM's (DDR1, DDR2, DDR3, DDR4) oder auch energiesparende Low Power Derivate wie LP_DDR2 oder LP_DDR4 zum Einsatz. Alternativ könne auch leistungsmäßig günstigere Bausteine wie SRAM's oder Hyper RAM's verwendet werden. In einer besonders vorteilhaften Ausgestaltung kommen an dieser Stelle ferroelektrische RAM's (FRAM) zum Einsatz. Diese zeichnen sich dadurch aus, den Speicherinhalt auch nach Deaktivieren der Spannungsversorgung 318 ohne elektrische Energie dauerhaft zu erhalten. In Verbindung mit dem oben beschriebenen Flash-FPGA ergibt sich eine Einheit aus FPGA und FRAM, welche an beliebiger Stelle einer Berechnung stromlos geschaltet werden kann, um beispielsweise im Netzteil 307 Energie zu sammeln, bevor ein weiterer Schritt einer umfangreichen Berechnung nach einer Wiederinbetriebnahme von FPGA und FRAM begonnen werden kann.

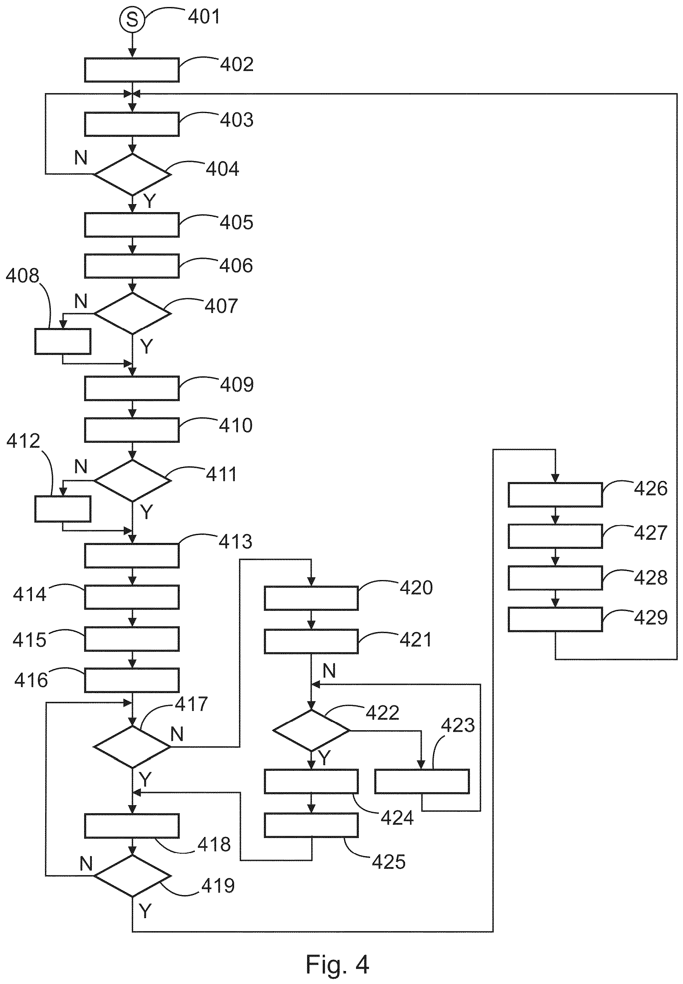

Fig. 4 zeigt beispielhaft anhand eines Ablaufdiagrammes eine besonders vorteilhafte Sequenz zur Umsetzung eines Messzyklus in einem Sensor 300. Das Verfahren beginnt im Startzustand 401. Im Schritt 402 wird zunächst der Prozessor 302 gestartet. Im Schritt 403 wird für eine definierte Zeit Energie im Energiespeicher 310 gesammelt, beispielsweise durch Aktivierung eines Energiesparmodus des Prozessors 302. Die Energie stammt vollständig aus einer Zweidrahtleitung 320 oder einer Dreidrahtleitung 320, beispielsweise einer 4..20mA Loop 320 oder einer IO-Link-Schnittstelle 320. Die Energie kann auch vollständig aus einer im Füllstandradar 300 verbauten Batterie (nicht dargestellt) bezogen werden. Im Schritt 404 wird überprüft, ob genügend Energie zum Start eines Messzyklus vorhanden ist. Hierzu kann die Verbindung 309 genutzt werden. Kann ein Messzyklus gestartet werden, wird im Schritt 405 der FPGA 303 mit zugehöriger Peripherie 304 durch Versorgung mit Energie 317, 318 gestartet. Im Schritt 406 wird die Steuerleitung 319, beispielsweise eine synchrone serielle Schnittstelle wie SPI oder QSPI, zum FPGA verbunden. Über diese Leitung kann im Schritt 407 kontrolliert werden, ob der FPGA schon vorkonfiguriert ist. Ist dies nicht der Fall, so wird im Schritt 408 der FPGA 303 durch Schreiben einer binären Programmiersequenz (Bitstream) konfiguriert. Im Schritt 409 werden die Steuerleitungen 107, 108, 203 zu den Radarchips verbunden. Im Schritt 410 werden die Radarchips 105, 106, 202 aktiviert, beispielsweise durch das Herstellen einer Verbindung 301 auf den Versorgungsleitungen 316 oder aber auch durch Absenden eines Ansteuerkommandos über die Steuerleitungen 107, 108, 203, welches die Radarchips aus dem Energiesparzustand in den Arbeitszustand überführt. Im anschließenden Schritt 411 wird überprüft, ob die Radarchips schon konfiguriert sind. Ist dies nicht der Fall, so wird im Schritt 412 mit Hilfe der Steuerleitungen 107, 108, 203 eine binäre Sequenz zur Konfiguration der RSoC's 105, 106, 202 geschrieben. Nach erfolgter Konfiguration werden im Schritt 413 die Datenleitungen 111, 112, 204, beispielsweise synchrone differentielle Leitungen nach dem LVDS Standard oder dem CSI-2 Standard, über den Schalter 306 mit dem FPGA 303 verbunden. Im Schritt 414 wird eine Radarmesssequenz über die Steuerleitungen 107, 108, 203 in den Radarchips angestoßen. Während der Abarbeitung dieser Sequenz werden Reflexionsdaten erfasst und in den FPGA 303 und/oder den Speicher 304 übertragen. Nach Abschluss der Radarmesssequenz werden im Schritt 415 die Datenleitungen 111, 112, 204 und ggf. die Steuerleitungen 107, 108, 203 zu den Radarchips wieder getrennt, bevor im Schritt 416 die RSoC's 105, 106, 202 wieder deaktiviert oder ausgeschaltet werden, um Energie zu sparen.

Es sei an dieser Stelle darauf hingewiesen, dass die Erfassung der Daten den Parallelbetrieb mehrerer Radarchips erfordert, und einen Großteil der Energie während eines gesamten Messzyklus verbraucht. Es kann daher vorgesehen sein, die Radarchips 105, 106, 202 nur so kurz als möglich zu aktivieren.

Im Schritt 417 wird überprüft, ob genügend Energie zum Start der Berechnungen zur Auswertung der Radarsignale vorhanden ist. Ist dies nicht der Fall, so wird im Schritt 420 die Steuerleitung 319 aufgetrennt, bevor im Schritt 420 sowohl der FPGA 303 als auch dessen Speicher 304 durch Auftrennen der Verbindungen 317, 318 stromlos geschaltet werden. Da die Daten sowohl im Flash-FPGA 303, als auch im FRAM 304 auch ohne Energieversorgung persistent erhalten bleiben, kann auf diese Art ein Maximum an Energie eingespart werden. Im Schritt 422 wird überprüft, ob nun genügend Energie zur Auswertung der Radardaten vorhanden ist. Ist dies nicht der Fall, wird im Schritt 423 weiter Energie gesammelt. Andernfalls wird im Schritt 424 die Versorgung 317, 318 wieder mit Spannung beaufschlagt, und im Schritt 425 die Steuerleitung 319 wieder verbunden. Somit kann in den Schritt 418 gewechselt werden, in welchem das nächste, anstehende und vordefinierte Paket an Radarsignalverarbeitungsschritten im FPGA 303 abgearbeitet wird. Da dieser hierfür erfindungsgemäße spezialisierte digitale Rechenstrukturen aufweist, kann dies sehr effizient und schnell ablaufen. Im Schritt 419 wird vom Prozessor 302 überprüft, ob alle erforderlichen Arbeitspakete zur Radarsignalverarbeitung abgearbeitet worden sind. Ist dies der Fall, wird im Schritt 426 das Ergebnis der FPGA-Berechnung über die Steuerleitung 319, welche eine bidirektionale Kommunikation erlaubt, an den Prozessor 302 übermittelt, bevor im Schritt 427 der FPGA 303 und sein Arbeitsspeicher 304 durch Auftrennen der Leitungen 317, 318, 319 wieder stromlos geschalten werden. Im Schritt 428 übermittelt der Prozessor die Ergebnisse der Messung an eine übergeordnete Stelle, beispielsweise über die 4..20mA Leitung 320 oder die IO-Link-Leitung 320 oder eine nicht dargestellte Funkschnittstelle. Im Schritt 429 wechselt der Prozessor in seinen Energiesparmodus, womit der Gesamtenergieverbrauch des Systems 300 wieder auf ein absolutes Minimum reduziert wird.

Es sei ergänzend darauf hingewiesen, dass ein "Abschalten" eines Bausteins oder einer Baugruppe auch ein "Deaktivieren" eines Bausteins oder einer Baugruppe mit dem Ziel der Reduktion der benötigten Leistung sein kann.

Weiterhin sei angemerkt, dass die Schaltelemente 305 auch im Prozessor 302 integriert sein können. Es kann auch vorgesehen werden, dass die Schaltelemente 306 im FPGA integriert oder implementiert werden können. Es kann auch vorgesehen sein, den Speicher 304 im FPGA zu integrieren. Beim FPGA 303 kann es sich auch um ein System on Chip handeln.

Es ist ein Kernaspekt einer Ausführungsform, mehrere Power-Domains in einem Radarsystem vorzusehen, die unterschiedlich lange aktiviert werden. Es kann auch als Aspekt angesehen werden, spezialisierte Hardwarebausteine derart zu kombinieren, dass diese bedingt durch ihren Aufbau und/oder bedingt durch die jeweilige Aufgabe im System derart zusammenwirken, dass im Gesamtergebnis ein extrem energiesparendes System realisiert wird. Auf diese Art kann der Energiespeicher 310 klein gehalten werden. Zudem wird pro Messzyklus dann nur ein Minimum an Energie verbraucht, was bei einem vorhandenen maximalen Energiebudget einer Schnittstelle 320 oder einer Batterie dazu führt, die Messwiederholrate des Gesamtsystems und/oder die Lebensdauer einer Batterie zu maximieren.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zum Erfassen eines Füllstands oder einer Topologie einer Oberfläche eines Füllguts durch ein Füllstandradar (300), aufweisend die Schritte:
Starten eines Steuerungsprozessors (302), eingerichtet zum Steuern des zeitlichen Ablaufs der Messung;
Sammeln von Energie in einem Energiespeicher (310);
wenn genügend Energie gesammelt worden ist:
Verbinden von Datenleitungen (111, 112, 204) zwischen einem oder mehreren Radarchips (105, 106, 202) und einem programmierbaren Logikgatter (303), mittels eines Datenleitungsschalters (306);
Durchführen eines Messzyklus, indem:
das programmierbare Logikgatter (303) gestartet wird; und
der eine oder die mehreren Radarchips (105, 106, 202) zum Durchführen einer Radarmesssequenz gestartet werden;
Unterbrechen der Datenleitungen (111, 112, 204), mittels des Datenleitungsschalters (306) und versetzen der Eingangspins des Logikgatters (303) in einen hochohmigen Zustand;
Abschalten der Radarchips (105, 106, 202);
Berechnen der Topologie oder des Füllstands durch das programmierbare Logikgatter (303) und den Steuerungsprozessor (302), wenn genügend Energie gesammelt worden ist;
Abschalten des programmierbaren Logikgatters (303);
Übermittlung des Ergebnisses der Messung an eine übergeordnete Stelle; und
Abschalten des Steuerungsprozessors (302).

2. Verfahren nach Anspruch 1,
wobei vor dem Berechnen der Topologie oder des Füllstands durch das programmierbare Logikgatter (303) ein Abschalten des programmierbaren Logikgatters (303) erfolgt, falls bisher nicht genügend Energie für das Berechnen der Topologie oder des Füllstands gesammelt worden ist.

3. Verfahren nach Anspruch 2,
wobei das Abschalten des programmierbaren Logikgatters (303) durch Öffnen einer Steuerleitung (319) zwischen dem Steuerungsprozessor (302) und dem programmierbaren Logikgatter und Stromlosschalten des programmierbaren Logikgatters (303) erfolgt.

4. Verfahren nach einem der vorhergehenden Ansprüche,
wobei die Energie, die in dem Energiespeicher gesammelt wird, vollständig aus einer Zweidrahtleitung (320), einer Dreidrahtleitung oder einer Batterie des Füllstandmessgeräts (300) stammt.

5. Verfahren nach einem der vorhergehenden Ansprüche,
wobei der Steuerungsprozessor (302) vor dem Sammeln von Energie in dem Energiespeicher in einen Energiesparmodus versetzt oder abgeschaltet wird.

6. Verfahren nach einem der vorhergehenden Ansprüche,
wobei das programmierbare Logikgatter (303) ein Field Programmable Gate Array, FPGA, ist.

7. Mehrdimensional messendes Füllstandradar (300), eingerichtet zur Durchführung eines Verfahrens nach einem der Ansprüche 1 bis 6, das Füllstandradar (300) aufweisend:
einen Energiespeicher (310);
einen Steuerungsprozessor (302);
ein programmierbares Logikgatter (303), eingerichtet zum Berechnen einer Topologie oder eines Füllstands;
einen oder mehrere Radarchips (105, 106, 202), eingerichtet zum Durchführen einer Radarmesssequenz;
ein Netzteil (307), eingerichtet zur Spannungsversorgung des Prozessors, des programmierbaren Logikgatters und der Radarchips;
einen Spannungsversorgungsschalter (301), eingerichtet zum wahlweisen Unterbrechen der Spannungsversorgung des programmierbaren Logikgatters (303) und der Radarchips (105, 106, 202);
einen Steuerleitungsschalter (305), eingerichtet zum, ggf. wahlweisen, Unterbrechen der Steuerleitungen (312, 312, 314) zwischen dem Steuerungsprozessor (302) und den Radarchips; und
einen Datenleitungsschalter (306), eingerichtet zum, ggf. wahlweisen, Unterbrechen der Datenleitungen (111, 112, 204) zwischen den Radarchips (105, 106, 202) und dem programmierbaren Logikgatter (303).

8. Programmelement, das, wenn es auf einem Prozessor (302) eines mehrdimensional messenden Füllstandradars (300) ausgeführt wird, das Füllstandradar anleitet, die folgenden Schritte durchzuführen:
Starten eines Steuerungsprozessors (302), eingerichtet zum Steuern des zeitlichen Ablaufs der Messung;
Sammeln von Energie in einem Energiespeicher (310);
wenn genügend Energie gesammelt worden ist:
Verbinden von Datenleitungen (111, 112, 204) zwischen einem oder mehreren Radarchips (105, 106, 202) und dem programmierbaren Logikgatter (303), mittels eines Datenleitungsschalter (306);
Durchführen eines Messzyklus, indem: das programmierbare Logikgatter (303) gestartet wird; und der eine oder die mehreren Radarchips (105, 106, 202) zum Durchführen einer Radarmesssequenz gestartet werden;
Unterbrechen der Datenleitungen (111, 112, 204), mittels des Datenleitungsschalter (306) und versetzen der Eingangspins des Logikgatters (303) in einen hochohmigen Zustand;
Abschalten der Radarchips (105, 106, 202);
Berechnen der Topologie oder des Füllstands durch das programmierbare Logikgatter und den Prozessor, wenn genügend Energie gesammelt worden ist;
Abschalten des programmierbaren Logikgatters (303);
Übermittlung des Ergebnisses der Messung an eine übergeordnete Stelle; und
Abschalten des Steuerungsprozessors (302).

9. Computerlesbares Medium, auf dem ein Programmelement nach Anspruch 8 gespeichert ist.

10. Verwendung eines mehrdimensional messenden Füllstandradars (300) nach Anspruch 7 oder eines Verfahrens nach einem der Ansprüche 1 bis 6 zur Bereichsüberwachung.

11. Verwendung eines mehrdimensional messenden Füllstandradars (300) nach Anspruch 7 oder eines Verfahrens nach einem der Ansprüche 1 bis 6 als/für eine Mikrowellenschranke.

## Claims

1. A method for detecting a level or topology of a surface of a product by a level radar (300), comprising the steps of:
starting a control processor (302) configured to control the timing of the measurement;
collecting energy in an energy store (310);
when sufficient energy has been collected:
connecting data lines (111, 112, 204) between one or more radar chips (105, 106, 202) and a programmable logic gate (303), by means of a data line switch (306);
performing a measurement cycle by:
starting the programmable logic gate (303); and
starting the one or more radar chips (105, 106, 202) to perform a radar measurement sequence;
interrupting the data lines (111, 112, 204) by means of the data line switch (306) and setting the input pins of the logic gate (303) to a high-impedance state;
switching off the radar chips (105, 106, 202);
calculating the topology or the fill level by the programmable logic gate (303) and the control processor (302) when sufficient energy has been collected;
switching off the programmable logic gate (303);
transmitting the result of the measurement to a higher-level centre; and
switching off the control processor (302).

2. The method according to claim 1,
wherein, before calculating, by the programmable logic gate (303), the topology or the level, the programmable logic gate (303) is switched off, if not enough energy has been collected so far for calculating the topology or the filling level.

3. The method according to claim 2,
wherein the switching off of the programmable logic gate (303) is performed by opening a control line (319) between the control processor (302) and the programmable logic gate and de-energising the programmable logic gate (303).

4. The method according to any one of the preceding claims,
wherein the energy collected in the energy storage is entirely from a two-wire line (320), a three-wire line, or a battery of the level meter (300).

5. The method according to any one of the preceding claims,
wherein the control processor (302) is set to an energy saving mode or switched off before collecting energy in the energy storage.

6. The method according to any one of the preceding claims,
wherein the programmable logic gate (303) is a Field Programmable Gate Array, FPGA.

7. A multidimensionally measuring level radar (300), configured to perform a method according to any one of claims 1 to 6, the level radar (300) comprising:
a control processor (302);
a programmable logic gate (303) configured to calculate a topology or a level;
one or more radar chips (105, 106, 202) configured to perform a radar measurement sequence;
a power supply unit (307) configured to supply power to the processor, the programmable logic gate and the radar chips;
a power supply switch (301) configured to selectively interrupt the power supply to the programmable logic gate (303) and the radar chips (105, 106, 202);
a control line switch (305) configured to interrupt, optionally, the control lines (312, 312, 314) between the control processor (302) and the radar chips; and
a data line switch (306) configured to interrupt, optionally, the data lines (111, 112, 204) between the radar chips (105, 106, 202) and the programmable logic gate (303).

8. A programme element which, when executed on a processor (302) of a multi-dimensional measuring level radar (300), instructs the level radar to perform the following steps:
starting a control processor (302) configured to control the timing of the measurement;
collecting energy in an energy store (310);
when sufficient energy has been collected:
connecting data lines (111, 112, 204) between one or more radar chips (105, 106, 202) and the programmable logic gate (303), by means of a data line switch (306);
performing a measurement cycle by: starting the programmable logic gate (303); and starting the one or more radar chips (105, 106, 202) to perform a radar measurement sequence;
interrupting the data lines (111, 112, 204) by means of the data line switch (306) and setting the input pins of the logic gate (303) to a high-impedance state;
switching off the radar chips (105, 106, 202);
calculating the topology or level by the programmable logic gate and the processor when sufficient energy has been collected;
switching off the programmable logic gate (303);
transmitting the result of the measurement to a higher-level location; and
switching off the control processor (302).

9. A computer-readable medium, on which a programme element according to claim 8 is stored.

10. Use of a multidimensionally measuring level radar (300) according to claim 7 or a method according to one of claims 1 to 6 for area monitoring.

11. Use of a multidimensionally measuring level radar (300) according to claim 7 or a method according to one of claims 1 to 6 as/for a microwave barrier.

## Revendications

1. Procédé pour détecter un niveau de remplissage (300) ou une topologie d'une surface d'un produit de remplissage par un radar de niveau de remplissage (300), comportant les étapes consistant à :
démarrer un processeur de commande (302) configuré pour commander l'exécution de la mesure dans le temps ;
collecter de l'énergie dans un accumulateur d'énergie (310) ;
lorsque suffisamment d'énergie a été collectée :
connecter des lignes de données (111, 112, 204) entre une ou plusieurs puces radar (105, 106, 202) et une porte logique programmable (303) au moyen d'un commutateur de ligne de données (306) ;
exécuter un cycle de mesure dans lequel :
la porte logique programmable (303) est démarrée ; et
la ou les plusieurs puces radar (105, 106, 202) sont démarrées pour exécuter une séquence de mesures radar ;
interrompre les lignes de données (111, 112, 204) au moyen du commutateur de ligne de données (306) et placer la broche d'entrée de la porte logique (303) dans un état de haute impédance ;
arrêter les puces radar (105, 106, 202) ;
calculer la topologie ou le niveau de remplissage par la porte logique programmable (303) et par le processeur de commande (302), lorsque suffisamment d'énergie a été collectée ;
arrêter la porte logique programmable (303) ;
transmettre le résultat de la mesure à un niveau supérieur ; et
arrêter le processeur de commande (302).

2. Procédé selon la revendication 1,
dans lequel, avant de calculer la topologie ou le niveau de remplissage par la porte logique programmable (303), un arrêt de la porte logique programmable (303) est effectué si l'énergie collectée pour calculer la topologie ou le niveau de remplissage n'est pas suffisante jusqu'à présent.

3. Procédé selon la revendication 2,
dans lequel l'arrêt de la porte logique programmable (303) est effectué en ouvrant une ligne de commande (319) entre le processeur de commande (302) et la porte logique programmable et en coupant le courant de la porte logique programmable (303).

4. Procédé selon l'une des revendications précédentes,
dans lequel l'énergie qui est collectée dans l'accumulateur d'énergie provient entièrement d'une ligne à deux fils (320), d'une ligne à trois fils ou d'une batterie de l'appareil de mesure de niveau de remplissage (300).

5. Procédé selon l'une des revendications précédentes,
dans lequel le processeur de commande (302) est placé en mode d'économie d'énergie ou arrêté avant la collecte d'énergie dans l'accumulateur d'énergie.

6. Procédé selon l'une des revendications précédentes,
dans lequel la porte logique programmable (303) est un circuit intégré prédiffusé programmable (Field Programmable Gate Array, FPGA).

7. Radar de niveau de remplissage à mesure multidimensionnelle (300), configuré pour mettre en œuvre un procédé selon l'une des revendications 1 à 6, le radar de niveau de remplissage (300) comportant :
un accumulateur d'énergie (310) ;
un processeur de commande (302) ;
une porte logique programmable (303) configurée pour calculer une topologie ou un niveau de remplissage ;
une ou plusieurs puces radar (105, 106, 202) configurées pour exécuter une séquence de mesures radar ;
un bloc d'alimentation (307) configuré pour alimenter en tension le processeur, la porte logique programmable et les puces radar ;
un commutateur d'alimentation en tension (301) configuré pour interrompre sélectivement l'alimentation en tension de la porte logique programmable (303) et des puces radar (105, 106, 202) ;
un commutateur de ligne de commande (305) configuré pour interrompre sélectivement, le cas échéant, les lignes de commande (312, 312, 314) entre le processeur de commande (302) et les puces radar ; et
un commutateur de ligne de données (306) configuré pour interrompre sélectivement, le cas échéant, les lignes de données (111, 112, 204) entre les puces radar (105, 106, 202) et la porte logique programmable (303).

8. Élément de programme qui, lorsqu'il est exécuté sur un processeur (302) d'un radar de niveau de remplissage à mesure multidimensionnelle (300), amène le radar de niveau de remplissage à exécuter les étapes suivantes consistant à :
démarrer un processeur de commande (302) configuré pour commander l'exécution de la mesure dans le temps ;
collecter de l'énergie dans un accumulateur d'énergie (310) ;
lorsque suffisamment d'énergie a été collectée :
connecter des lignes de données (111, 112, 204) entre une ou plusieurs puces radar (105, 106, 202) et la porte logique programmable (303) au moyen d'un commutateur de ligne de données (306) ;
exécuter un cycle de mesure : en démarrant la porte logique programmable (303) ; et en démarrant une ou plusieurs puces radar (105, 106, 202) pour exécuter une séquence de mesures radar ;
interrompre les lignes de données (111, 112, 204) au moyen du commutateur de ligne de données (306) et placer la broche d'entrée de la porte logique (303) dans un état de haute impédance ;
arrêter les puces radar (105, 106, 202) ;
calculer la topologie ou le niveau de remplissage par la porte logique programmable et le processeur, lorsque suffisamment d'énergie a été collectée ; arrêter la porte logique programmable (303) ;
transmettre le résultat de la mesure à un niveau supérieur ; et
arrêter le processeur de commande (302).

9. Support lisible par ordinateur sur lequel est stocké un élément de programme selon la revendication 8.

10. Utilisation d'un radar de niveau de remplissage à mesure multidimensionnelle (300) selon la revendication 7 ou d'un procédé selon l'une des revendications 1 à 6 pour la surveillance de zone.

11. Utilisation d'un radar de niveau de remplissage à mesure multidimensionnelle (300) selon la revendication 7 ou d'un procédé selon l'une des revendications 1 à 6 comme/pour une barrière hyperfréquences.
